# EUROPÄISCHE PATENTANMELDUNG

(11) **EP 4 571 436 A1**
(43) Veröffentlichungstag der Anmeldung: **18.06.2025**
(21) Anmeldenummer: 23216376.6
(22) Anmeldetag: 13.12.2023
(51) Int. Cl.: G05B 19/042, G05B 23/02, G01D 18/00

(54) **VALIDIEREN EINER FÜR EINEN SENSOR VORGESEHENEN POSITION**

(71) Anmelder: Siemens Aktiengesellschaft, 80333 München (DE)
(72) Erfinder: Horcher, Daniel, 96103 Hallstadt (DE); Labs, Torsten, 90478 Nürnberg (DE)
(74) Vertreter: Siemens Patent Attorneys

(57) **Zusammenfassung**

Die Erfindung betrifft ein Verfahren zum Validieren einer für einen Sensor (S) an einer zu überwachenden Komponente (K) vorgesehenen Position, wobei der Senor (S) ausgebildet ist, die zu überwachende Komponente (K) zu überwachen, wodurch mindestens ein zu validierender Messwert (MD) bereitgestellt wird, wobei dem mindestens einem zu validierenden Messwert (MD) ein Sensoridentifikator (SI) zugeordnet ist,
mit den Schritten:
- ein Heranziehen (S3) des mindestens einen zu validierenden Messwerts (MD),
- ein Heranziehen (S4) von mindestens einem zu erwartenden Messwert (ID),
wobei dem mindestens einem zu erwartenden Messwert (ID) ebenfalls der Sensoridentifikator (SI) zugeordnet ist, wobei dem mindestens einen zu erwartenden Messwert (ID) außerdem ein Komponentenidentifikator (KI),
- das Validieren (S7) basierend auf einem Ergebnis eines Vergleichens (S6) des mindestens einen zu validierenden Messwerts (MD) und des mindestens einen zu erwartenden Messwerts (ID).

Außerdem betrifft die Erfindung ein Computerprogrammprodukt, eine Analyseeinheit (AE) und ein übergeordnetes System.

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die Erfindung betrifft ein Verfahren zum Validieren einer für einen Sensor an einer zu überwachenden Komponente vorgesehenen Position. Außerdem betrifft die Erfindung ein Computerprogrammprodukt, eine Analyseeinheit und ein übergeordnetes System.

### Beschreibung des Stands der Technik

Immer häufiger werden Anlagen, insbesondere in der Fertigung oder Kraftwerke, aus der Ferne gesteuert und überwacht. Neuartige drahtlose Sensorsystemen bietet eine Möglichkeit, bisher unüberwachte Assets zu monitoren.

Nachteilig gegenüber den bisher häufig verdrahteten und fest installierten Sensoren, z.B. PT100, oder angeschraubten Vibrationssensoren ist jedoch, dass die Messposition der Sensoren durch lokale Analgenmitarbeiter vor Ort gewollt oder auch ungewollt verändert werden kann.

Aktuell wird die Zuweisung der Sensoren (auch als Sensorknoten bezeichenbar) zu der Messposition einmalig bei Installation des Sensorsystems an der zu überwachenden Komponente durch Installationsmitarbeiter des Anlagenherstellers durchgeführt und dokumentiert. Der Anlagenhersteller hat nach Installation keine Dokumentation oder Kontrolle über gegebenenfalls veränderte Sensor- und Messpositionen.

Mitarbeiter (des Herstellers oder des Anlagenbetreibers) wiederrum, welche die Messdaten der Sensoren erhalten und auswerten, sitzen häufig nicht vor Ort und stellen deshalb in den meisten Fälle die verändernde Messposition an der zu überwachenden Komponente nicht fest. Daraus ergibt sich das Problem, dass die aus der zu überwachenden Anlage in der Cloud für die weitere Auswertung ankommenden Daten fälschlicherweise zur Datenanalyse herangezogen und bewertet werden, und wiederum als Basis dienen, um weitere Maßnahmen, insbesondere Instandhaltung und/oder Wartung zu initiieren.

Eine zweite Ursache für eine falsche Datenbasis, neben der Veränderung der Messposition, kann eine Cyberattacke auf das Sensorsystem sein, durch welche "gefälschte" Daten in die Cloud geschickt werden.

Bisher können verändernde Messposition remote nur dadurch festgestellt werden, dass die Datenauswertung beispielsweise zeigt, dass ein erster RMS-Wert eines Frequenzbandes eines ersten Sensors in einem annähernd identischen Bereich liegt, wie ein zweiter RMS-Wert eines Frequenzbandes eines zweiten Sensors, obwohl sich die beiden Sensoren laut Plan an unterschiedlichen und keine ähnlichen Messwerte zulassenden Position befinden sollten.

Die Aufgabe der Erfindung besteht darin, eine Lösung für ein verbessertes Validieren einer für einen Sensor an einer zu überwachenden Komponente vorgesehenen Position bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Validieren einer für einen Sensor an einer zu überwachenden Komponente vorgesehenen Position,
wobei der Senor ausgebildet ist, die zu überwachende Komponente zu überwachen, wodurch mindestens ein zu validierender Messwert bereitgestellt wird,
wobei dem mindestens einem zu validierenden Messwert ein Sensoridentifikator zugeordnet ist, wobei der Sensor über den Sensoridentifikator eindeutig identifizierbar ist, (ob dem mindestens einem zu validierenden Messwert auch die korrekte Komponente zugeordnet ist, wird durch das erfindungsgemäße Verfahren geprüft)
mit den Schritten:
   - ein Heranziehen des mindestens einen zu validierenden Messwerts,
   - ein Heranziehen von mindestens einem zu erwartenden Messwert (auch als bei Installation vorliegenden Messwert oder Referenzmesswert zu betrachten und bezeichenbar),
      wobei dem mindestens einem zu erwartenden Messwert ebenfalls der Sensoridentifikator zugeordnet ist,
      wobei dem mindestens einen zu erwartenden Messwert außerdem ein Komponentenidentifikator der zu überwachenden Komponente zugeordnet ist, wobei die zu überwachenden Komponente über den Komponentenidentifikator eindeutig identifizierbar ist, wobei der mindestens eine zu erwartende Messwert bestimmt (ermittelt) wurde durch:
         o eine frühere Messung an der zu überwachenden Komponente durch den Sensor an der zu überwachenden Komponente vorgesehenen Position,
            und/oder ("und" bedeutet insbesondere, dass die frühere Messung in die Simulation eingezogen wird, "oder" bedeutet, dass der mindestens eine zu erwartende Messwert entweder durch die frühere Messung oder durch eine reine Simulation ohne Daten der früheren Messung erzeugt wurde)
         o eine Simulation (Modellierung), wobei die Simulation basiert, auf:
            ▪ Betriebsdaten der zu überwachenden Komponente, und
            ▪ technischen Daten der zu überwachenden Komponente, und
            ▪ der für den Sensor an der zu überwachenden Komponente vorgesehenen Position,
   - ein Vergleichen, insbesondere ein Soll-Ist-Abgleich, des mindestens einen zu validierenden Messwerts und des mindestens einen zu erwartenden Messwerts, und
   - das Validieren, auch als eine Plausibilitätsprüfung bezeichenbar, der für den Sensor an der zu überwachenden Komponente vorgesehenen Position basierend auf einem Ergebnis des Vergleichens des mindestens einen zu validierenden Messwerts und des mindestens einen zu erwartenden Messwerts.

Das Vergleichen des mindestens einen zu validierenden Messwerts und des mindestens einen zu erwartenden Messwerts ist insbesondere auch als ein insbesondere ein Soll-Ist-Abgleich zu betrachten. Durch das Vergleichen wird festgestellt, ob eine Abweichung (auch als Differenz oder Unterschied bezeichenbar) zwischen dem mindestens einen zu validierenden Messwert (Ist-Wert) und dem mindestens einen zu erwartenden Messwert (Soll-Wert) besteht und so das Ergebnis des Vergleichens bereitgestellt. Das Vergleichen ist insbesondere als ein Bilden der Differenz (Ergebnis des Vergleichens) der beiden Werte ausgebildet. In der Ausführungsform, in welcher der mindestens eine zu validierende Messwert (Ist-Wert) und der mindestens eine zu erwartende Messwert (Soll-Wert) jeweils als ein Frequenzspektrum ausgebildet ist, wird für das Vergleichen insbesondere eine Differenz der Mittelwerte (Ergebnis des Vergleichens) der beiden Frequenzspektren und der Standardabweichungen (Ergebnis des Vergleichens) der der beiden Frequenzspektren gebildet.

Das Validieren der für den Sensor an der zu überwachenden Komponente vorgesehenen Position erfolgt basierend auf einem Ergebnis des Vergleichens des mindestens einen zu validierenden Messwerts und des mindestens einen zu erwartenden Messwerts. In Abhängigkeit des Ergebnisses wird entschieden (validiert), ob der mindestens eine zu validierende Messwert, insbesondere eine ermittelte Differenz zu dem mindestens einen zu erwartenden Messwert, innerhalb eines akzeptablen Bereichs liegt. Solange der akzeptable Bereich nicht verlassen wird, wird festgestellt, dass sich der Sensor an der, für den Sensor an der zu überwachenden Komponente, vorgesehenen Position befindet. Sobald der akzeptable Bereich verlassen wird, wird festgestellt, dass sich der Sensor nicht an der, für den Sensor an der zu überwachenden Komponente, vorgesehenen Position befindet. Entsprechende Maßnahmen sind einleitbar.

In einer Weiterbildung der Erfindung umfasst das erfindungsgemäße Verfahren die weiteren vorangehenden Schritte:
- Ein Erfassen (insbesondere ein visuelles Aufnehmen, insbesondere eine Aufnahme eines QR-Codes und/oder eines Bar-Codes) der Komponentenidentifikators, wobei der Komponentenidentifikator der zu überwachenden Komponente zugeordnet ist, wobei die zu überwachenden Komponente über den Komponentenidentifikator eindeutig identifizierbar ist, und
- ein Erfassen (insbesondere ein visuelles Aufnehmen, insbesondere eine Aufnahme eines QR-Codes und/oder eines Bar-Codes) des Sensoridentifikators, und
- ein Abrufen der technischen Daten der zu überwachenden Komponente, wobei die technischen Daten dem Komponentenidentifikator zugeordnet sind (das Abrufen der technischen Daten erfolgt also über den Komponentenidentifikator), und
- ein Abrufen der Betriebsdaten der zu überwachenden Komponente, wobei die technischen Daten dem Komponentenidentifikator zugeordnet sind (das Abrufen der Betriebsdaten erfolgt also über den Komponentenidentifikator), und
- ein Bestimmen (Ermitteln) des mindestens einen zu erwartenden Messwerts durch die frühere Messung und/oder die Simulation (Modellierung), die Simulation basierend auf:
   o den Betriebsdaten der zu überwachenden Komponente, und den technischen Daten der zu überwachenden Komponente, und der für den Sensor an der zu überwachenden Komponente vorgesehenen Position, und
   o optional basiert die Simulation weiterhin auf: der früheren Messung an der zu überwachenden Komponente durch den Sensor an der zu überwachenden Komponente vorgesehenen Position,
   und
- ein Erstellen einer Zuordnung des Sensoridentifikators zu dem mindestens einen zu erwartenden Messwert (wodurch außerdem auch eine Zuordnung des Sensors zu dem zu erwartenden Messwert erstellt ist), und
- ein Erstellen einer Zuordnung des Komponentenidentifikators zu dem mindestens einen zu erwartenden Messwert (wodurch außerdem eine Zuordnung der zu überwachenden Komponente zu dem zu erwartenden Messwert erstellt ist).

Nach dieser Ausführungsform ist das Verfahren außerdem zum Bestimmen des mindestens einen zu erwartenden Messwerts durch die frühere Messung und/oder durch die Simulation ausgebildet.

Nach dieser Ausführungsform bietet die Erfindung eine teilautomatisierte Lösung, welche bei Inbetriebnahme eines Sensors (insbesondere eines kompletten Sensorsystems, welches mehrere Sensoren aufweist) eine durch den Sensor zu überwachende Komponente mit ihrem zugehörigen Sensor koppelt (auch als ein "Pairing" bezeichenbar). Die Kopplung geschieht über die Zuordnung des Sensoridentifikators zu dem mindestens einen zu erwartenden Messwert, welche an der zu überwachende Komponente bestimmt (d.h. ermittelt und/oder gemessen) wurde.

Um später außerdem von dem mindestens einen zu erwartenden Messwert auf die zugehörige zu überwachende Komponente rückschließen und diese identifizieren zu können, ist dem mindestens einen zu erwartenden Messwert außerdem der Komponentenidentifikator zugeordnet. So kann, falls durch das erfindungsgemäße Verfahren ein auffälliger zu validierender Messwert festgestellt wird, die entsprechende zu überwachende Komponente über den zu erwartenden Messwert und den Komponentenidentifikator identifiziert werden und dort insbesondere eine Wartung initiiert werden.

In einer weiteren Weiterbildung der Erfindung umfasst das erfindungsgemäße Verfahren die weiteren Schritte:
- ein Speichern des mindestens einen zu erwartenden Messwerts, und
- ein Bereitstellen des gespeicherten mindestens einen zu erwartenden Messwerts, und
- ein Speichern der Zuordnung des Sensoridentifikators zu dem mindestens einen zu erwartenden Messwert, und
- ein Bereitstellen der gespeicherten Zuordnung des Sensoridentifikators zu dem mindestens einen zu erwartenden Messwert, und
- ein Speichern der Zuordnung des Komponentenidentifikators zu dem mindestens einen zu erwartenden Messwert, und
- ein Bereitstellen der gespeicherten Zuordnung des Komponentenidentifikators zu dem einen mindestens zu erwartenden Messwert.

Das Speichern der genannten Werte bzw. der genannten Zuordnung erfolgt insbesondere in einer externen Speichereinheit außerhalb des Sensors, auf welche remote zugegriffen werden kann, insbesondere in einem Cloud-Speicher.

In einer weiteren Weiterbildung der Erfindung ist der Komponentenidentifikator und/oder der Sensoridentifikator ausgebildet als:
- ein QR-Code, und/oder
- ein Bar-Code, und/oder
- eine Gerätekennung, und/oder
- ein Gerätecode, und/oder
- eine Identifikationsnummer, vergeben durch einen Kunden und/oder Anlagenbetreiber, (auch als "Kundenidentifikationsnummer" bekannt, wenn auch nicht der Kunde damit identifiziert wird, sondern es sich um eine von dem Kunden vergebenen Identifikationsnummer für seine Komponente und/oder seinen Sensor handelt), und/oder
- eine Anlagenidentifikationsnummer, und/oder
- eine maschinenlesbare Fabrikatsbezeichnung.

Insbesondere weisen der QR-Code und/oder der Bar-Code die Gerätekennung, den Gerätecode, die Identifikationsnummer, die Anlagenidentifikationsnummer und/oder die maschinenlesbare Fabrikatsbezeichnung auf und/oderverweisen darauf.

In einer weiteren Weiterbildung der Erfindung umfasst das erfindungsgemäße Verfahren die weiteren Schritte:
- eine Ausgabe einer Meldung basierend auf dem Ergebnis des Vergleichens des mindestens einen zu validierenden Messwerts und des mindestens einen zu erwartenden Messwerts, und/oder
- eine Ausgabe einer Meldung basierend auf dem Validieren der für den Sensor an der zu überwachenden Komponente vorgesehenen Position, und/oder
- ein Initiieren einer Wartungsaktion für den Sensor basierend auf dem Validieren der für den Sensor an der zu überwachenden Komponente vorgesehenen Position, und/oder
- ein automatisiertes Durchführen einer Wartungsaktion für den Sensor basierend auf dem Validieren der für den Sensor an der zu überwachenden Komponente vorgesehenen Position.

Nach dieser Ausführungsform sind Reaktion auf das Ergebnis des Vergleichens und/oder auf das Validieren beschrieben.

In einer weiteren Weiterbildung der Erfindung umfassen die Betriebsdaten der zu überwachenden Komponente außerdem:
- Betriebsdaten von Teilkomponenten der zu überwachenden Komponente, insbesondere zu einem Lager und/oder zu einem Getriebe
- eine Drehzahl eines Getriebes, und/oder
- eine Drehzahl eines Antriebs.

Die genannten Ausführungsformen der Betriebsdaten betreffen somit die überwachenden Komponente und/oder die Teilkomponenten der zu überwachenden Komponente.

In einer weiteren Weiterbildung der Erfindung umfassen die technischen Daten der zu überwachenden Komponente:
o Daten aus einem Produktstammbaum der zu überwachenden Komponente, und/oder
o Konstruktionsdaten der zu überwachenden Komponente, und/oder
o eine Abmessung der zu überwachenden Komponente, und/oder
o Daten zu Teilkomponenten der zu überwachenden Komponente, insbesondere zu einem Lager und/oder zu einem Getriebe.

Die genannten Ausführungsformen der technischen Daten betreffen somit die überwachenden Komponente und/oder die Teilkomponenten der zu überwachenden Komponente.

In einer weiteren Weiterbildung der Erfindung sind der mindestens eine zu validierende Messwert und der mindestens eine zu erwartende Messwert ausgebildet als:
- Ein Frequenzspektrum, und/oder
- Ein Hüllkurvenspektrum, und/oder
- eine Überrollfrequenz (insbesondere eines Lagers im Hüllkurvenspektrum), und/oder
- eine Vibrationsfrequenz, und/oder
- eine Geschwindigkeitsfrequenz, und/oder
- eine Beschleunigungsfrequenz und/oder
- ein Temperaturwert und/oder
- ein Luftfeuchtigkeitswert und/oder
- ein akustischer Messwert und/oder
- ein optischer Messwert und/oder
- ein Umgebungswert der zu überwachenden Komponente.

In einer weiteren Weiterbildung der Erfindung weist der mindestens eine zu erwartenden Messwert und/oder der mindestens eine zu validierende Messwert außerdem auf:
o eine kryptographische Verschlüsselung, und/oder
o ein privates kryptographisches Zertifikat des Sensors und/oder
o einen Hardware-Fingerabdruck des Sensors, (welcher den mindestens einen zu erwartenden Messwert in Form eines Hardware-Fingerabdrucks aufweist).

Diese Ausführungsform hat den Vorteil, dass durch den kryptographischen Schutz eine Manipulation des mindestens einen zu erwartenden Messwerts und/oder des mindestens einen zu validierende Messwerts vermeidbar ist. So können eine Verifikation und Prüfung der Integrität und/oder Authentizität des Sensors erfolgen. So wird sichergestellt, dass der mindestens eine zu erwartende Messwert und/oder der mindestens eine zu validierende Messwert auch tatsächlich von dem vorgesehenen Sensor stammen.

In einer weiteren Weiterbildung der Erfindung umfasst das erfindungsgemäße Verfahren die weiteren Schritte:
- ein Entschlüsseln des mindestens einen zu validierenden Messwerts, und/oder
- ein Entschlüsseln des mindestens einen zu erwartenden Messwerts,
jeweils nach dem Heranziehen des mindestens einen zu validierenden Messwerts bzw. des mindestens einen zu erwartenden Messwerts.

Insbesondere erfolgt das Entschlüsseln durch ein öffentliches Zertifikat des Sensors.

In einer weiteren Weiterbildung der Erfindung ist der Sensor ausgebildet als:
- eine Geschwindigkeitssensor, und/oder
- eine Beschleunigungssensor und/oder
- ein Temperatursensor und/oder
- ein Luftfeuchtigkeitssensor und/oder
- ein akustischer Sensor und/oder
- ein optischer Sensor und/oder
- ein Drucksensor.

Nach einer weiteren Ausführungsform wird der Sensor von einem Sensorsystem aufgewiesen. Das Sensorsystem weist insbesondere mehrere Sensoren auf.

Die Erfindung umfasst außerdem ein Computerprogrammprodukt, insbesondere ein Computerlesbares Medium, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem eine Analyseeinheit aufweisend ein erfindungsgemäßes Computerprogrammprodukt ausgebildet das Computerprogramm auszuführen.

Die Erfindung umfasst außerdem ein übergeordnetes System, aufweisend:
- Eine erfindungsgemäße Analyseeinheit, und
- eine Datenbank, insbesondere aufgewiesen von einer Speichereinheit, und
- mindestens eine zu überwachende Komponente, und
- mindestens ein Sensorsystem aufweisend mindestens einen Sensor.

In einer Weiterbildung der Erfindung ist das erfindungsgemäße übergeordnete System ausgebildet als:
- Ein Internet-of-Things-System, und/oder
- eine industrielle Anlage, und/oder
- eine Produktionsanlage, und/oder
- ein Gebäudekomplex, und/oder
- ein Energienetz, und/oder
- ein Fahrzeug, und/oder
- ein Transportmittel, und/oder
- ein Kraftwerk, und/oder
- ein Energieerzeugungssystem, und/oder
- ein medizintechnisches System, und/oder
- ein bildgebendes medizinisches System.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen:
Fig. 1 ein Ablaufdiagramm des erfindungsgemäßen Verfahrens, und
Fig. 2 eine schematische Darstellung ein erfindungsgemäßes übergeordnetes System.

### DETAILLIERTE BESCHREIBUNG DER ERFINDUNG

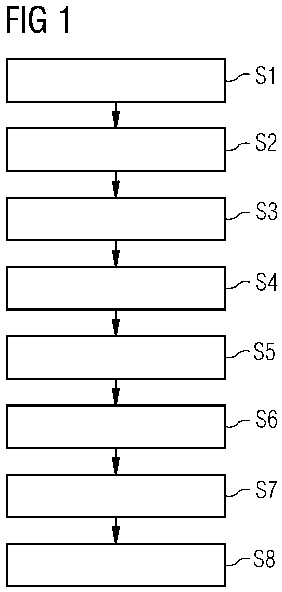

Fig. 1 zeigt ein Ablaufdiagramm des erfindungsgemäßen Verfahrens zum Validieren einer für einen Sensor an einer zu überwachenden Komponente vorgesehenen Position,
wobei der Senor ausgebildet ist, die zu überwachende Komponente zu überwachen, wodurch mindestens ein zu validierender Messwert bereitgestellt wird,
wobei dem mindestens einem zu validierenden Messwert ein Sensoridentifikator zugeordnet ist, wobei der Sensor über den Sensoridentifikator eindeutig identifizierbar ist,
mit den optionalen Schritten S1 zum Bestimmen des mindestens einen zu erwartenden Messwerts durch die frühere Messung und/oder durch die Simulation:
   - Ein Erfassen der Komponentenidentifikators, wobei der Komponentenidentifikator der zu überwachenden Komponente zugeordnet ist, wobei die zu überwachenden Komponente über den Komponentenidentifikator eindeutig identifizierbar ist, und
   - ein Erfassen des Sensoridentifikators, und
   - ein Abrufen der technischen Daten der zu überwachenden Komponente, wobei die technischen Daten dem Komponentenidentifikator zugeordnet sind, und
   - ein Abrufen der Betriebsdaten der zu überwachenden Komponente, wobei die technischen Daten dem Komponentenidentifikator zugeordnet sind, und
   - ein Bestimmen des mindestens einen zu erwartenden Messwerts durch die frühere Messung und/oder die Simulation, und
   - ein Erstellen (S1) einer Zuordnung des Sensoridentifikators zu dem mindestens einen zu erwartenden Messwert, und
   - ein Erstellen (S1) einer Zuordnung des Komponentenidentifikators zu dem mindestens einen zu erwartenden Messwert,
mit den weiteren optionalen Schritten S2:
   - ein Speichern des mindestens einen zu erwartenden Messwerts, und
   - ein Bereitstellen des gespeicherten mindestens einen zu erwartenden Messwerts, und
   - ein Speichern der Zuordnung des Sensoridentifikators zu dem mindestens einen zu erwartenden Messwert, und
   - ein Bereitstellen der gespeicherten Zuordnung des Sensoridentifikators zu dem mindestens einen zu erwartenden Messwert, und
   - ein Speichern der Zuordnung des Komponentenidentifikators zu dem mindestens einen zu erwartenden Messwert, und
   - ein Bereitstellen der gespeicherten Zuordnung des Komponentenidentifikators zu dem einen mindestens zu erwartenden Messwert,
mit den erfindungsgemäßen Schritten:
   - Schritt S3: Ein Heranziehen des mindestens einen zu validierenden Messwerts,
   - Schritt S4: Ein Heranziehen von mindestens einem zu erwartenden Messwert,
      wobei dem mindestens einem zu erwartenden Messwert ebenfalls der Sensoridentifikator zugeordnet ist, wobei dem mindestens einen zu erwartenden Messwert außerdem ein Komponentenidentifikator der zu überwachenden Komponente zugeordnet ist, wobei die zu überwachenden Komponente über den Komponentenidentifikator eindeutig identifizierbar ist, wobei der mindestens eine zu erwartende Messwert bestimmt (S1) wurde durch:
      o eine frühere Messung an der zu überwachenden Komponente durch den Sensor an der zu überwachenden Komponente vorgesehenen Position,
         und/oder
      o eine Simulation, wobei die Simulation basiert, auf:
         ▪ Betriebsdaten der zu überwachenden Komponente, und
         ▪ technischen Daten der zu überwachenden Komponente, und
         ▪ der für den Sensor an der zu überwachenden Komponente vorgesehenen Position,
mit den weitern optionalen Schritten S5:
   - ein Entschlüsseln des mindestens einen zu validierenden Messwerts, und/oder
   - ein Entschlüsseln des mindestens einen zu erwartenden Messwerts,
mit den weiteren erfindungsgemäßen Schritten:
   - Schritt S6: ein Vergleichen des mindestens einen zu validierenden Messwerts und des mindestens einen zu erwartenden Messwerts, und
   - Schritt S7: das Validieren der für den Sensor an der zu überwachenden Komponente vorgesehenen Position basierend auf einem Ergebnis des Vergleichens des mindestens einen zu validierenden Messwerts und des mindestens einen zu erwartenden Messwerts
mit den weiteren optionalen Schritten S8:
   - eine Ausgabe einer Meldung basierend auf dem Ergebnis des Vergleichens (gemäß Schritt S6) des mindestens einen zu validierenden Messwerts und des mindestens einen zu erwartenden Messwerts, und/oder
   - eine Ausgabe einer Meldung basierend auf dem Validieren (gemäß Schritt S7) der für den Sensor an der zu überwachenden Komponente vorgesehenen Position, und/oder
   - ein Initiieren einer Wartungsaktion für den Sensor basierend auf dem Validieren (gemäß Schritt S7) der für den Sensor an der zu überwachenden Komponente vorgesehenen Position, und/oder
   - ein automatisiertes Durchführen einer Wartungsaktion für den Sensor basierend auf dem Validieren (gemäß Schritt S7) der für den Sensor an der zu überwachenden Komponente vorgesehenen Position.

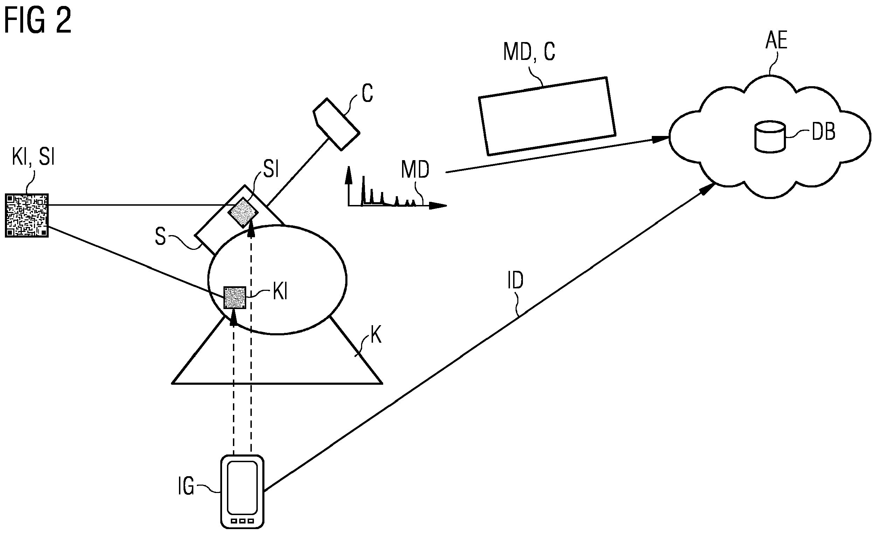

Fig. 2 zeigt ein erfindungsgemäßes übergeordnetes System, insbesondere ausgebildet als eine industrielle Internet-of-Things-Anlage. Die industrielle Internet-of-Things-Anlage weist auf:
- Eine erfindungsgemäße Analyseeinheit AE, und
- eine Datenbank DB, und
- mindestens eine zu überwachende Komponente K, und
- mindestens ein Sensorsystem, aufweisend mindestens einen Sensor S.

Der mindestens einen zu überwachende Komponente K ist ein Komponentenidentifikator KI zugeordnet.

Dem mindestens einen Sensor S ist ein Sensoridentifikator SI zugeordnet. Der Sensor S ist ausgebildet den zu validierenden Messwert MD (auch als aktuell gemessene Daten zu betrachten) und den zu erwartenden Messwert ID (auch als bei einer Installation vorgelegene Daten zu betrachten). Im Ausführungsbeispiel sind die zu validierenden Messwert MD mit einem privaten kryptographischen Zertifikat C geschützt.

Mit einem Installationsgerät IG erfolgt bei Installation des Sensors S an der durch den Sensor S zu überwachenden Komponente K ein visuelles Aufnehmen/Erfassen des Komponentenidentifikators KI und des Sensoridentifikators SI. Der Komponentenidentifikator KI und der Sensoridentifikator SI sind als QR-Codes ausgebildet. In dem QR-Code des Komponentenidentifikators KI sind der zu überwachenden Komponente K technischen Daten der zu überwachenden Komponente und Betriebsdaten der zu überwachenden Komponente zugeordnet.

Der Sensor S misst bei Installation den zu erwartenden Messwert ID. Dem zu erwartenden Messwert ID wird der Komponentenidentifikator KI und der Sensoridentifikator SI zugeordnet. So wird eine Verknüpfung (auch Kopplung und/oder Pairing) zwischen dem Sensor S und seiner zu überwachenden Komponente K erstellt. Der zu erwartenden Messwert ID wird in der Datenbank hinterlegt und der erfindungsgemäße Analyseeinheit AE bereitgestellt.

Im Einsatz, einige Zeit nach der Installation, wird das erfindungsgemäße Verfahren durchgeführt. Die Analyseeinheit AE zieht hierfür den eben gemessenen zu validierenden Messwert MD mit dem privaten kryptographischen Zertifikat C und den gespeicherten zu erwartenden Messwert ID heran, um anschließend das erfindungsgemäße Vergleichen und Validieren durchzuführen.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Validieren einer für einen Sensor (S) an einer zu überwachenden Komponente (K) vorgesehenen Position, wobei der Senor (S) ausgebildet ist, die zu überwachende Komponente (K) zu überwachen, wodurch mindestens ein zu validierender Messwert (MD) bereitgestellt wird,
wobei dem mindestens einem zu validierenden Messwert (MD) ein Sensoridentifikator (SI) zugeordnet ist, wobei der Sensor (S) über den Sensoridentifikator (SI) eindeutig identifizierbar ist,
mit den Schritten:
- ein Heranziehen (S3) des mindestens einen zu validierenden Messwerts (MD),
- ein Heranziehen (S4) von mindestens einem zu erwartenden Messwert (ID),
wobei dem mindestens einem zu erwartenden Messwert (ID) ebenfalls der Sensoridentifikator (SI) zugeordnet ist, wobei dem mindestens einen zu erwartenden Messwert (ID) außerdem ein Komponentenidentifikator (KI) der zu überwachenden Komponente (K) zugeordnet ist, wobei die zu überwachenden Komponente (K) über den Komponentenidentifikator (KI) eindeutig identifizierbar ist,
wobei der mindestens eine zu erwartende Messwert (ID) bestimmt (S1) wurde durch:
o eine frühere Messung an der zu überwachenden Komponente (K) durch den Sensor (S) an der zu überwachenden Komponente (K) vorgesehenen Position,
und/oder
o eine Simulation, wobei die Simulation basiert, auf:
▪ Betriebsdaten der zu überwachenden Komponente (K), und
▪ technischen Daten der zu überwachenden Komponente (K), und
▪ der für den Sensor (S) an der zu überwachenden Komponente (K) vorgesehenen Position,
- ein Vergleichen (S6) des mindestens einen zu validierenden Messwerts (MD) und des mindestens einen zu erwartenden Messwerts (ID), und
- das Validieren (S7) der für den Sensor (S) an der zu überwachenden Komponente (K) vorgesehenen Position basierend auf einem Ergebnis des Vergleichens (S6) des mindestens einen zu validierenden Messwerts (MD) und des mindestens einen zu erwartenden Messwerts (ID).

2. Verfahren nach Anspruch 1,
mit den weiteren vorangehenden Schritten (S1):
- Ein Erfassen des Komponentenidentifikators (KI), und
- ein Erfassen des Sensoridentifikators (SI), und
- ein Abrufen der technischen Daten der zu überwachenden Komponente (K), wobei die technischen Daten dem Komponentenidentifikator (KI) zugeordnet sind, und
- ein Abrufen der Betriebsdaten der zu überwachenden Komponente (K), wobei die technischen Daten dem Komponentenidentifikator (KI) zugeordnet sind, und
- ein Bestimmen des mindestens einen zu erwartenden Messwerts (ID) durch die frühere Messung und/oder die Simulation, und
- ein Erstellen einer Zuordnung des Sensoridentifikators (SI) zu dem mindestens einen zu erwartenden Messwert (ID), und
- ein Erstellen einer Zuordnung des Komponentenidentifikators (KI) zu dem mindestens einen zu erwartenden Messwert (ID).

3. Verfahren nach Anspruch 2,
mit den weiteren Schritten (S2):
- ein Speichern des mindestens einen zu erwartenden Messwerts (ID), und
- ein Bereitstellen des mindestens einen zu erwartenden Messwerts (ID), und
- ein Speichern der Zuordnung des Sensoridentifikators (SI) zu dem mindestens einen zu erwartenden Messwert (ID), und
- ein Bereitstellen der Zuordnung des Sensoridentifikators (SI) zu dem mindestens einen zu erwartenden Messwert (ID), und
- ein Speichern der Zuordnung des Komponentenidentifikators (KI) zu dem mindestens einen zu erwartenden Messwert (ID), und
- ein Bereitstellen der Zuordnung des Komponentenidentifikators (KI) zu dem einen mindestens zu erwartenden Messwert (ID).

4. Verfahren nach einem der vorhergehenden Ansprüche, wobei der Komponentenidentifikator (KI) und/oder der Sensoridentifikator (SI) ausgebildet ist als:
- ein QR-Code, und/oder
- ein Bar-Code, und/oder
- eine Gerätekennung, und/oder
- ein Gerätecode, und/oder
- eine Identifikationsnummer, vergeben durch einen Kunden und/oder Anlagenbetreiber, und/oder
- eine Anlagenidentifikationsnummer, und/oder
- eine maschinenlesbare Fabrikatsbezeichnung.

5. Verfahren nach einem der vorhergehenden Ansprüche,
mit den weiteren Schritten (S8) :
- eine Ausgabe einer Meldung basierend auf dem Ergebnis des Vergleichens (S6) des mindestens einen zu validierenden Messwerts (MD) und des mindestens einen zu erwartenden Messwerts (ID), und/oder
- eine Ausgabe einer Meldung basierend auf dem Validieren (S7) der für den Sensor (S) an der zu überwachenden Komponente (K) vorgesehenen Position, und/oder
- ein Initiieren einer Wartungsaktion für den Sensor (S) basierend auf dem Validieren (S7) der für den Sensor (S) an der zu überwachenden Komponente (K) vorgesehenen Position, und/oder
- ein automatisiertes Durchführen einer Wartungsaktion für den Sensor (S) basierend auf dem Validieren (S7) der für den Sensor (S) an der zu überwachenden Komponente (K) vorgesehenen Position.

6. Verfahren nach einem der vorhergehenden Ansprüche,
wobei die Betriebsdaten der zu überwachenden Komponente (K) außerdem umfassen:
- Betriebsdaten von Teilkomponenten der zu überwachenden Komponente (K), und/oder
- eine Drehzahl eines Getriebes, und/oder
- eine Drehzahl eines Antriebs.

7. Verfahren nach einem der vorhergehenden Ansprüche,
wobei die technischen Daten der zu überwachenden Komponente (K) umfassen:
o Daten aus einem Produktstammbaum der zu überwachenden Komponente (K), und/oder
o Konstruktionsdaten der zu überwachenden Komponente (K), und/oder
o eine Abmessung der zu überwachenden Komponente (K), und/oder
o Daten zu Teilkomponenten der zu überwachenden Komponente (K) .

8. Verfahren nach einem der vorhergehenden Ansprüche,
wobei der mindestens eine zu validierende Messwert (MD) und der mindestens eine zu erwartende Messwert (ID) ausgebildet sind als:
- Ein Frequenzspektrum, und/oder
- Ein Hüllkurvenspektrum, und/oder
- eine Überrollfrequenz, und/oder
- eine Vibrationsfrequenz, und/oder
- eine Geschwindigkeitsfrequenz, und/oder
- eine Beschleunigungsfrequenz und/oder
- ein Temperaturwert und/oder
- ein Luftfeuchtigkeitswert und/oder
- ein akustischer Messwert und/oder
- ein optischer Messwert und/oder
- ein Umgebungswert der zu überwachenden Komponente.

9. Verfahren nach einem der vorhergehenden Ansprüche,
wobei der mindestens eine zu erwartenden Messwert (ID) und/oder der mindestens eine zu validierende Messwert (MA) außerdem aufweist:
o eine kryptographische Verschlüsselung, und/oder
o ein privates kryptographisches Zertifikat (C) des Sensors (S) und/oder
o einen Hardware-Fingerabdruck des Sensors (S).

10. Verfahren nach einem der vorhergehenden Ansprüche,
mit den weiteren Schritten (S5):
- ein Entschlüsseln des mindestens einen zu validierenden Messwerts (MD), und/oder
- ein Entschlüsseln des mindestens einen zu erwartenden Messwerts (ID).

11. Verfahren nach einem der vorhergehenden Ansprüche,
wobei der Sensor (S) ausgebildet ist, als:
- eine Geschwindigkeitssensor, und/oder
- eine Beschleunigungssensor und/oder
- ein Temperatursensor und/oder
- ein Luftfeuchtigkeitssensor und/oder
- ein akustischer Sensor und/oder
- ein optischer Sensor und/oder
- ein Drucksensor.

12. Computerprogrammprodukt, insbesondere ein Computerlesbares Medium, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 11 ausgeführt werden, wenn das Computerprogramm auf der Recheneinheit ausgeführt wird.

13. Analyseeinheit (AE) aufweisend ein Computerprogrammprodukt nach Anspruch 12,
ausgebildet das Computerprogramm auszuführen.

14. Übergeordnetes System,
aufweisend:
- Eine Analyseeinheit (AE) nach Anspruch 13, und
- eine Datenbank (DB), und
- mindestens eine zu überwachende Komponente (K), und
- mindestens ein Sensorsystem aufweisend mindestens einen Sensor (S).

15. Übergeordnetes System nach Anspruch 14,
ausgebildet als:
- Ein Internet-of-Things-System, und/oder
- eine industrielle Anlage, und/oder
- eine Produktionsanlage, und/oder
- ein Gebäudekomplex, und/oder
- ein Energienetz, und/oder
- ein Fahrzeug, und/oder
- ein Transportmittel, und/oder
- ein Kraftwerk, und/oder
- ein Energieerzeugungssystem, und/oder
- ein medizintechnisches System, und/oder
- ein bildgebendes medizinisches System.
